# EUROPEAN PATENT SPECIFICATION

(11) **EP 3 126 573 B1**
(45) Date of publication and mention of the grant of the patent: **13.02.2019**
(21) Application number: 15726955.6
(22) Date of filing: 02.06.2015
(51) Int. Cl.: D04H 3/10, D04H 13/00, D04H 3/005, E01C 13/08, D05C 17/02, D05C 15/08

(54) **MAT FOR FORMING AN ARTIFICIAL LAWN AND PROCESS FOR PRODUCING SUCH A MAT**
MATTE ZUR HERSTELLUNG VON KUNSTRASEN UND VERFAHREN ZUR HERSTELLUNG SOLCH EINER MATTE
TAPIS POUR FORMER UN GAZON ARTIFICIEL ET PROCÉDÉ DE FABRICATION D'UN TEL TAPIS

(30) Priority: 02.06.2014 EP 14170811
(43) Date of publication of application: 08.02.2017
(73) Proprietor: BFS Europe NV, 9770 Kruishoutem (BE)
(72) Inventor: BEAUPREZ, Mathijs, 9040 Sint-Amandsberg (BE); DE RUDDER, Kjell, 9320 Erembodegem (BE); VANCOILLIE, Frank, 8710 Wielsbeke (BE); VERLEYEN, Marc, 8531 Hulste (BE)
(74) Representative: LC Patents
(86) International application number: PCT/EP2015/062278
(87) International publication number: WO 2015/185562

(56) References cited:
- WO-A2-2012/058555
- DE-A1- 3 703 866
- US-A- 4 217 383
- US-A- 5 976 645
- US-A1- 2007 237 921

## Description

### Field of the invention

The present application relates to a mat for forming an artificial lawn, to a process for making the mat, and to artificial lawn.

### Background of the invention

For the purpose of the further description, with artificial lawn it is meant a lawn with artificial fibers representing grass and which may be used for one or more activity such as sport, training or which even can be adapted for a particular activity or leisure. Often infills such as sand or granules are used in combination with artificial lawn to provide a softer, damping and thus less injury-prone playing surface and this also leads to better playing characteristics. Pure esthetically, in general an artificial lawn with an infill resembles much more a natural grass field than without infill. Furthermore, when using an infill for forming an artificial lawn, the artificial fibers are better maintained in an upright position, due to the dense structure of the filler material.

According to the art, e.g. US20040229007, an infilled artificial surface can resemble natural grass-like play characteristics due to the use of distinct groups of fibers with different heights extending upwardly from a backing, and stabilizing infill material residing on the backing. One group of grass-like fibers have a height extending from the backing to above the infilled area and another group of fibers have a height extending from the backing but not above the infilled area.

Referring e.g. to FIFA requirements, as detailed in the FIFA Quality Concept Handbook of Test Methods for Football Turf (January 2012 Edition), a guidance for assessing the ball surface interaction, player surface interaction and durability of product, necessary measures need to ensure that sufficient energy absorption happens when touching the artificial lawn. More in particular this energy absorption is not only of importance at the place directly underneath the place of touching the lawn, but also in a local area around that place. The required absorption may be defined for the particular purpose or activity for which the artificial lawn is intended for, like for instance playing football. In this respect it is noted that when sports are practiced onto artificial lawns from the art, players are typically much faster and more easily getting tired, due to the so-called restitution of the lawn, which is the negative result of the absorption characteristics. An example of prior art solution can be found in document DE3703866A1.

### Aim of the invention

The invention aims at providing a mat for an artificial lawn, such as a grass sports field, with improved playing and field characteristics.

### Summary of the invention

According to the invention, there are provided a mat having the features of claim 1 and a process having the features of claim 15.

### Drawings

Figure 1 shows an embodiment of a mat for forming an artificial lawn in accordance with the present invention.
Figure 2 shows another exemplary embodiment of a mat for forming an artificial lawn in accordance with the present invention.
Figure 3 shows an embodiment of an artificial lawn in accordance with the present invention.
Figure 4 shows another exemplary embodiment of an artificial lawn in accordance with the present invention.
Figure 5 illustrates schematically an embodiment of the process for producing a mat for forming an artificial lawn in accordance with the present invention.

### Detailed description of the invention

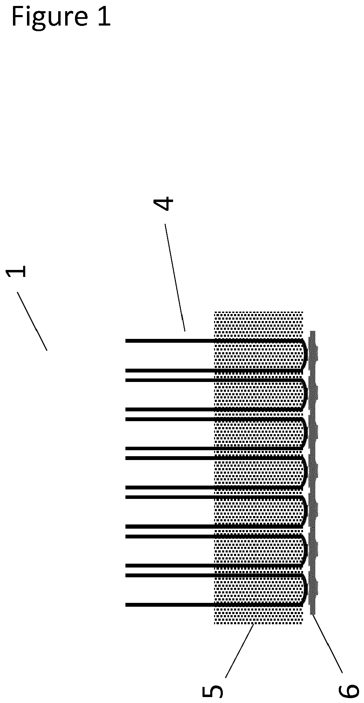

Figure 1 illustrates a mat 1 for forming an artificial lawn 9 according to the present invention. There are no particular restrictions on the dimensions of the mat 1, and which are dependent on the desired application. The mat 1 comprises a cushioning layer 5 and artificial fibers 4. The artificial fibers 4 are attached to the cushioning layer 5 by means of tufting techniques. The cushioning layer 5 serves as a carrier or primary backing, and moreover provides shock-absorbing properties like a shock pad. The cushioning layer 5 can be made for instance of resilient foam or of expanded structures made of polymeric material, or of extruded filaments in an open web. The artificial fibers 4 are e.g. synthetic grass fibers, and are preferably made of LLDPE (linear low density polyethylene), but may also be made in other PE variants, as well as e.g. polypropylene, polyester or nylon. Particularly for the application of an artificial grass sports field, the artificial fibers 4 of the mat 1 are artificial grass fibers. However in the case of leisure, playmats, anti-fatigue mats or other sports fields, the artificial fibers 4 may represent another type of natural or decorative effect.

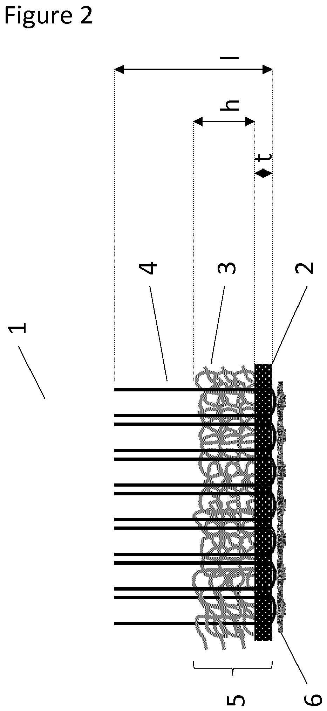

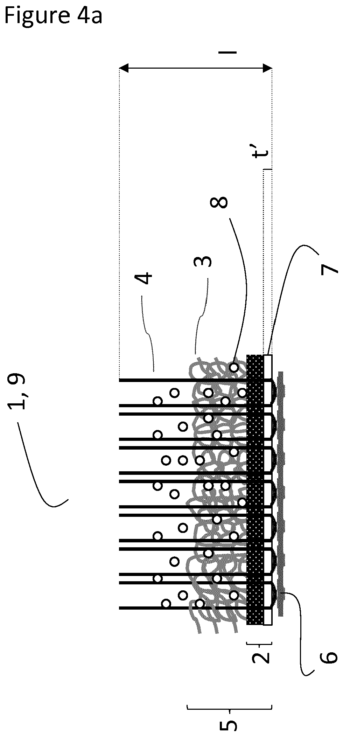

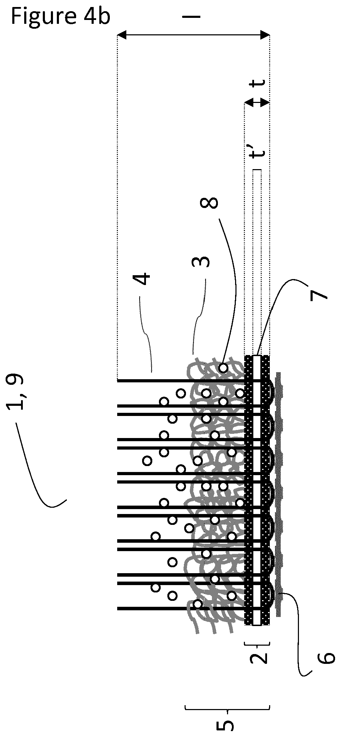

The mat 1 for forming an artificial lawn 9 may further comprise an additional layer, such as a secondary backing layer 6 (as shown in Figure 1, 2) or a reinforcing layer 7 (as shown in Figure 4a, 4b) underneath the cushioning layer 5, in order to protect the tufted fibers or to enhance (e.g. strengthening) the mat construction.

The secondary backing layer 6 can be made of PE powder or glue, PVC or could be for example an extrusion coating, or can be fabricated according to calander thermo processing. The reinforcing layer 7, provided underneath or within the cushioning layer 5 (as depicted in Figure 4a, 4b) will provide dimensional stability to the mat 1. The reinforcing layer 7 can be a woven or a non-woven (e.g. needle felt, spunbond, or glass fiber) fabric. The reinforcing layer has a thickness t' between 0.1mm and 3mm, preferably between 0.2mm and 1.5mm, more preferably between 0.5mm and 1mm.

In Figure 2, the cushioning layer 5 of the mat 1 comprises a substrate 2 as a lower layer, onto which a lofty open web of inter-engaged continuously crinkled filaments 3 is provided, i.e. the filaments 3 are crinkled and are applied onto the substrate 2 as a continuous spaghetti-like structure. These filaments 3 are preferably attached to the substrate 2 by means of glueing and/or melting together part of the filaments 3 at some or all points of mutual contact with the substrate 2. Both the substrate 2 and the filaments 3 on top, forming together an integrated structure are typically made of resilient polymeric material, such as e.g. thermoplastic polymeric material. With resilient polymeric material it is meant a material particularly having resilient characteristics, i.e. having the ability of returning to an original shape or position after compression. They can be made of polyvinyl chloride (PVC), PE, PP, polyamide (PA), ethylene propylene diene monomer (EPDM) or any other suitable polymeric material. The artificial fibers 4 are tufted through the substrate 2 and extending therefrom and above the open web.

According to the invention, the substrate 2 as depicted in Figure 2 is an extruded layer (possibly foamed) of e.g. PVC or polyolefin, PE, PP, PA, EPDM, or any other suitable polymeric material, preferably resembling a thick plastic flexible structure, and having a thickness t. The thickness t can vary between 0.5mm and 10mm, preferably between 0.5mm and 5mm, more preferably between 1mm and 4mm. The lofty open web of filaments 3 has a height h above the substrate. of between 3mm and 40mm, preferably between 5mm and 20mm, more preferably between 7mm and 15mm, and most preferably between 13mm and 15mm.

The linear mass density, i.e. the mass in grams per 10000m, of one artificial fiber 4, is between 400dtex (decitex) and 6000dtex, preferably between 1000dtex and 4500dtex, and most preferably between 1600dtex and 2500dtex. The length I of the tufted cut piles of the artificial fibers 4 is generally between 10mm and 80mm, preferably between 30mm and 70mm, more preferably between 40mm and 60mm.

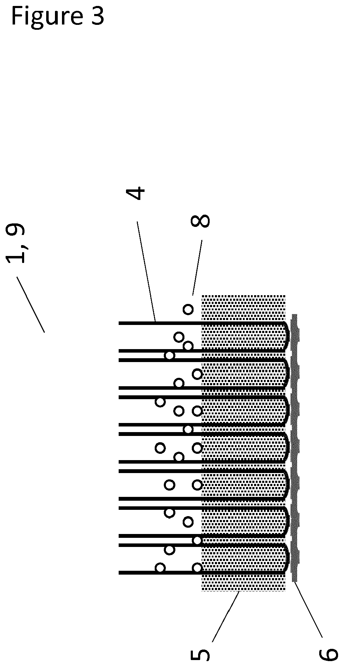

When the mat 1 of the present invention is used as an artificial lawn 9, in particular a grass sports field an infill material 8 is added in-between the artificial fibers 4 onto the cushioning layer 5 as shown in Figure 3.

According to another embodiment, depicted in Figure 4a and Figure 4b, in the artificial lawn 9, comprising a mat 1 with a cushioning layer 5 comprising a substrate 2 and the lofty open web of filaments, an infill material 8 is dispersed throughout the open web, and preferably also partially in-between the artificial fibers 4.

Due to the integrated structure of open web filaments 3 with the substrate 2, much less infill 8 is required compared to other artificial lawns of the art. Less than 50%, even less than 35% of the typical amount of infills used in artificial lawns of the art is possible. In one embodiment, the artificial lawn comprises less than 15 kg/m², preferably less than 10 kg/m², more preferably less than 8 kg/m², even more preferably less than 6 kg/m² of infill. In some embodiments of the present invention, the use of an infill 8 can even be omitted. With the integrated structure comprising the substrate 2 and the filaments 3, into which the infill 8 is incorporated in a limited amount, the infill 8 will eventually become denser over time to a lesser extent compared to artificial lawns of the art. Hence the quality of the artificial lawn comprising a mat 1 according to the present invention is far better compared to those of the art.

The infill material 8 can for instance be made of plastic, rubber material, or organic material such as cork or coco. In a preferred embodiment hollow infill materials may be used, e.g. the polymer granules referred to in WO2009/118388. The infill materials 8 are preferably not sand. Sand may have a negative effect because of its clogging effect due to environmental/weather conditions after a while.

The mat 1 according to the present invention represents a specific energy absorption, through which a certain damping or bouncing effect is generated. Particularly for sports applications, this leads to mats with improved playing characteristics compared to the art. Moreover, people can also benefit of this effect for other applications. In an environment e.g. where people need to walk frequently or intensively, the mat according to the present invention can typically function as anti-fatigue mat.

According to an embodiment of the present invention, the mat 1 is provided with a further shockpad, determined as a shock-absorbing layer, beneath the tufted structure.

In one preferred embodiment, the artificial lawn 9 according to the present invention has a force reduction (FR) in the range of 40% to 90%, preferably in the range of 55% to 70%, more preferably in the range of 60% to 70%.

In another preferred embodiment, the artificial lawn 9 according to the present invention has a vertical deformation (VD) in the range of 4-11mm, preferably in the range of 4-10mm, more preferably in the range of 4-9mm, even more preferably in the range of 4-8mm.

In yet another preferred embodiment, the artificial lawn 9 according to the present invention has an energy restitution (ER) in the range of 10% to 80%, preferably in the range of 20% to 40%, and more preferably in the range of 20% to 30%.

In a highly preferred embodiment, the artificial lawn of the present invention possesses a combination of at least 2 of the foregoing parameters (i.e. at least 2 of FR, VD, and ER), and in the most preferred embodiment, the artificial lawn meets all 3 parameters (i.e. FR, VD and ER). The artificial mat, according to the most preferred embodiment, thus has:
- a force reduction (FR) in the range of 40% to 90%, preferably in the range of 55% to 70%, more preferably in the range of 60% to 70%; and
- a vertical deformation (VD) in the range of 4-11mm, preferably in the range of 4-10mm, more preferably in the range of 4-9mm, even more preferably in the range of 4-8mm; and
- an energy restitution (ER) in the range of 10% to 80%, preferably in the range of 20% to 40%, and more preferably in the range of 20% to 30%.

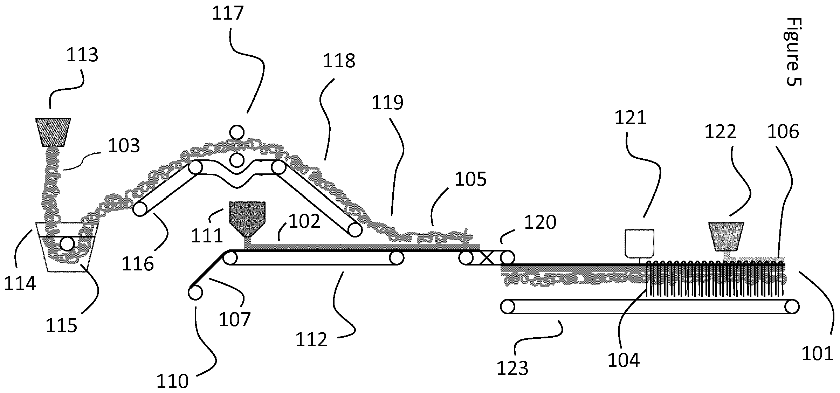

According to the invention, a process for producing a mat 1 is also provided, comprising the steps of (i) providing a cushioning layer 5 and (ii) tufting artificial fibers 4 through this cushioning layer 5, forming a tufted structure. In an embodiment of the invention, the cushioning layer 5 comprises a substrate 2 and an open web of inter-engaged continuously, crinkled filaments 3, wherein the artificial fibers 4 are tufted through the substrate 2 and through the open web. Figure 5 illustrates schematically the production process for a mat 1, 101 in accordance with this particular embodiment.

Shown in Figure 5, is a process scheme for manufacturing a mat 1, 101 for forming an artificial lawn 9 in accordance with the present invention. More in particular, the mat 1, 101 comprises a cushioning layer 5, 105 with a substrate 2, 102 and an open web. Starting with a roller 110 from which a reinforcing layer 7, 107 is unwound, a line 112 is consecutively arranged during which a substrate 2, 102 is provided. The substrate 2, 102 in fluid state, delivered from the tank 111, is directly applied onto the reinforcing layer 7, 107, for the line 112 being active. Further, an extruder tank 113 is part of the production set-up, out of which loose filaments 3, 103 are extruded and lead to a bath 114 filled with water 115 in order to cool down the extruded filaments 3, 103. As soon as the filaments 3, 103 are guided out of the water bath 114, a next line 116 is followed transporting them to another stage 117 where the filaments 3, 103 are provided with an adhesive. The filaments 3, 103 with loose ends are now fixed or glued together with for example PVC, such that a continuous crinkled chain is formed, and as a result a better constitution is achieved for energy absorption. The filaments chain is then further transported via the line 118 down to further stage 119 where filaments 3, 103 and substrate 2, 102, provided with reinforcing layer 7, 107, are brought together and where part of the filaments 3, 103 are bonded, melted and/or welded at some or all points of mutual contact with the substrate 2, 102. Further continuing the process now with the cushioning layer or primary backing 5, 105 being finished, at consecutive stage 120 the entire primary backing 5, 105 formed is now turned upside down in order to achieve the appropriate orientation for tufting the primary backing 5, 105. The reinforcing layer 7, 107, being provided onto the substrate 2, 102, is now on top, facing the tufting equipment 121, as the primary backing 5, 105 is further propagated. Besides the tufting equipment 121, by means of which artificial fibers 4, 104 are attached, the line 123 is subsequently provided with a tank 122, ejaculating a backing layer or secondary backing 6, 106, being applied onto the tufted structure and thereby loop pile bonding the tufted structure. At the end of the line 123, the production of the mat 1, 101 is accomplished.

In addition to the example of a football field as a grass sports field, other kinds of playing fields applicable to the present invention can be e.g. hockey fields, rugby pitches, polo, American/Australian football, golf, baseball, ski and snowboard, tennis courts, landscaping, including any other indoor as well outdoor sports field.

Moreover, playgrounds or leisure fields are also mentioned as an example.

### Experiment related to FIFA requirements

According to the January 2012 Edition of the FIFA Quality Concept Test Method Manual, a new methodology for the measurement of respectively force reduction - as determination of shock absorption, vertical deformation and energy restitution, has been presented in accordance with the so-called Triple A test, also known as the Advanced Artificial Athlete. The Triple A test method allows to measure force reduction, vertical deformation and energy restitution.

It is also noted that the FIFA Quality Concept has introduced two categories of performance. FIFA Recommended Two Star, further referred to as FIFA**, is the professional category and has been established to ensure fields meeting it, replicate the playing qualities of the best quality natural turf pitches. This category is intended for official games and competition matches. The FIFA Recommended One Star category, further referred to as FIFA*, has slightly wider bands of acceptability and is rather aimed at training and community use.

The FIFA Quality Concept laboratory test program concerns a program of simulated use to assess the ability of a surface to perform for a period of time.

The FIFA test method for the determination of shock absorption includes a set-up, wherein a mass of 20kg, having a spring with 70mm diameter mounted to its lower side, is dropped from a 55mm height onto an artificial lawn placed above a concrete floor. As mentioned in the January 2012 Edition of the FIFA Quality Concept Handbook, the force reduction expressed as a percentage, is determined as follows. From the recorded acceleration of the mass from the moment of release till after its impact with the artificial lawn, the force reduction is calculated by comparing the percentage reduction in this force relative to a reference force (theoretical force on concrete, without artificial lawn). A higher percentage of force reduction means that the artificial lawn performs more shock absorption.

In ideal conditions, natural turf produces a force reduction of between 60 and 70%. Hence, the force reduction in the shock absorption test for a FIFA** qualification for an artificial lawn has to be in the range of 60 to 70%. On the other hand, the force reduction has to be in the range of 55 to 70% for obtaining a FIFA* qualification.

The energy restitution being a measure for the energy returned by the artificial lawn (or natural turf), can also be calculated out of the Triple A test. The energy restitution is e.g. aimed at 20-50%, or else 20-40% for stricter qualification. In comparison, generally, natural turf has an energy restitution of 20-30%.

As a final measure related to the Triple A test, the vertical deformation is herewith considered, being in the range of 4-11mm for a FIFA* qualification, and in the range of 4-10mm for a FIFA** qualification for an artificial lawn.

### Test example

Conforming the above Triple A test regarding FIFA* and FIFA** qualification for an artificial lawn in accordance with the present invention, has been measured.

In a first step a mat without any infill dispersed into it was tested, and corresponding shock absorption was measured, in 2 different positions, in point A and B respectively, and for 3 different impacts (N=1, 2, 3).

The mat is made of a foamed PVC substrate with a thickness of 3 mm, attached thereto an open web of filaments with a thickness of 12 mm. The filaments have a diameter of about 0.5 mm on average. Fibers of 5200 dtex are tufted through the substrate and the open web of filaments with a total height of about 45 mm.

Table 1 represents the values for the vertical deformation (VD) in mm, the force reduction (FR) in %, as well as the energy restitution (ER) in % as calculated for the test.

**Table 1: A mat (without infill)**

| Point | N | VD(mm) | FR(%) | ER(%) |
|---|---|---|---|---|
| A | 1 | 8,08 | 55,7 | 22,9 |
| A | 2 | 8,09 | 51,9 | 27,6 |
| A | 3 | 7,32 | 47,0 | 33,2 |
| MA | | 7,70 | 49,5 | 30,4 |
| | | | | |

| Point | N | VD(mm) | FR(%) | ER(%) |
|---|---|---|---|---|
| B | 1 | 9,57 | 58,3 | 19,7 |
| B | 2 | 8,57 | 52,8 | 26,2 |
| B | 3 | 7,89 | 48,8 | 30,9 |
| MB | | 7,71 | 50,8 | 30,4 |
| | | | | |
| FIFA* | | 4-11 | 55-70 | - |
| FIFA** | | 4-10 | 60-70 | - |

Next, the same mat provided with an infill was tested, and corresponding shock absorption was measured, again in 2 different positions, in point A and B respectively, and for 3 different impacts (N=1, 2, 3). The infill are rubber granules, dispersed for a layer of 10mm and from the type Holo SP TPE of 5kg/m². Table 2 represents the values for the vertical deformation (VD) in mm, the force reduction (FR) in %, as well as the energy restitution (ER) in % as calculated for the test.

**Table 2: A mat with infill, being a 10mm Holo SP TPE (rubber granules) layer of 5kg/m²**

| Point | N | VD(mm) | FR(%) | ER(%) |
|---|---|---|---|---|
| A | 1 | 9,89 | 62,9 | 22,2 |
| A | 2 | 8,94 | 59,0 | 25,5 |
| A | 3 | 9,24 | 58,5 | 27,8 |
| MA | | 9,09 | 58,8 | 26,6 |
| | | | | |
| B | 1 | 9,00 | 62,5 | 24,4 |
| B | 2 | 10,12 | 63,5 | 24,2 |
| B | 3 | 9,86 | 61,9 | 26,3 |
| MB | | 9,99 | 62,7 | 25,3 |
| | | | | |
| FIFA* | | 4-11 | 55-70 | - |
| FIFA** | | 4-10 | 60-70 | - |

As a conclusion, it can be clearly stated that the artificial lawn according to the present invention, comprising a mat with an infill of rubber granules, satisfies the FIFA* and/or FIFA** qualification requirements for an artificial lawn.

## Claims

1. A mat (1, 101), for forming an artificial lawn (9), comprising a cushioning layer (5, 105); and artificial fibers (4, 104); said artificial fibers (4, 104) are attached to said cushioning layer (5, 105) by means of tufting techniques, **characterized in that** said cushioning layer (5, 105) comprises a substrate (2, 102) as a lower layer onto which is provided an open web of inter-engaged continuously, crinkled filaments (3, 103) of resilient polymeric material forming an integrated structure and said artificial fibers (4, 104) extend from said substrate (2, 102) through and above said open web.

2. The mat (1, 101) of claim 1, wherein said substrate (2, 102) and said filaments (3, 103) are made of thermoplastic polymeric material.

3. The mat (1, 101) of claims 1 or 2, wherein said substrate (2, 102) is a foamed, extruded polymeric layer.

4. The mat (1, 101) of claims 1 to 3, wherein said substrate (2, 102) has a thickness between 0.5mm and 10 mm.

5. The mat (1, 101) of claims 1 to 4, wherein said open web of inter-engaged continuously, crinkled filaments (3, 103) has a height of between 3 mm and 40 mm above said substrate (2, 102).

6. The mat (1, 101) of claims 1 to 5, wherein said artificial fibers (4, 104) have a length of between 10 mm and 80 mm.

7. The mat (1, 101) according to claims 1 to 6, further comprising a reinforcing layer (7, 107) and/or a backing layer (6, 106) underneath said cushioning layer (5, 105).

8. The mat (1, 101) according to claims 1 to 7, wherein at least a portion of said open web is adherently bonded to said substrate (2, 102).

9. An artificial lawn (9), in particular a grass sports field, comprising a mat (1, 101) according to claims 1 to 8; and infill material (8).

10. The artificial lawn (9) of claim 9, comprising a mat (1, 101) according to claims 1 to 8, wherein at least a portion of said infill material (8) is dispersed throughout said open web, and preferably also in between said artificial fibers (4, 104).

11. The artificial lawn (9) according to claims 9 to 10, wherein the infill material (8) is made of plastics, rubber material, or organic material.

12. The artificial lawn (9) according to claims 9 to 11, having a force reduction (FR) in the range of 40% to 90%, preferably in the range of 55% to 70%, more preferably in the range of 60% to 70% as measured according to the Triple A test of the January 2012 Edition of the FIFA Quality Concept Test Method manual.

13. The artificial lawn (9) according to claims 9 to 12, having a vertical deformation (VD) in the range of 4-11mm, preferably in the range of 4-10mm, more preferably in the range of 4-9mm, even more preferably in the range of 4-8mm as measured according to the Triple A test of the January 2012 Edition of the FIFA Quality Concept Test Method manual.

14. The artificial lawn (9) according to claims 9 to 13, having an energy restitution (ER) in the range of 10% to 80%, preferably in the range of 20% to 40%, and more preferably in the range of 20% to 30% as measured according to the Triple A test of the January 2012 Edition of the FIFA Quality Concept Test Method manual.

15. A process for producing a mat (1, 101) according to claims 1 to 8, comprising the steps of (i) providing a cushioning layer (5, 105) comprising a substrate (2, 102) as a lower layer onto which is provided an open web of inter-engaged continuously, crinkled filaments (3, 103) of resilient polymeric material forming an integrated structure and (ii) tufting artificial fibers (4, 104) through and above said cushioning layer (5, 105), forming a tufted structure.

## Patentansprüche

1. Matte (1, 101) zum Bilden eines Kunstrasens (9), umfassend eine Dämpfungsschicht (5, 105); und Kunstfasern (4, 104); wobei die Kunstfasern (4, 104) an der Dämpfungsschicht (5, 105) mithilfe von Tufting-Technik befestigt sind, **dadurch gekennzeichnet, dass** die Dämpfungsschicht (5, 105) ein Substrat (2, 102) als eine untere Schicht umfasst, auf welcher ein offenes Gewebe von kontinuierlich ineinander eingreifenden gekräuselten Fäden (3, 103) aus einem elastischen Polymerwerkstoff bereitgestellt ist, welche eine integrierte Struktur bilden, und dass die Kunstfasern (4, 104) sich von dem Substrat (2, 102) durch das und oberhalb des offenen Gewebes erstrecken.

2. Matte (1, 101) nach Anspruch 1, wobei das Substrat (2, 102) und die Fäden (3, 103) aus thermoplastischem Polymerwerkstoff hergestellt sind.

3. Matte (1, 101) nach den Ansprüchen 1 oder 2, wobei das Substrat (2, 102) eine geschäumte, stranggepresste Polymerschicht ist.

4. Matte (1, 101) nach den Ansprüchen 1 bis 3, wobei das Substrat (2, 102) eine Dicke zwischen 0,5 mm und 10 mm aufweist.

5. Matte (1, 101) nach den Ansprüchen 1 bis 4, wobei das offene Gewebe von kontinuierlich ineinander eingreifenden gekräuselten Fäden (3, 103) eine Höhe von zwischen 3 mm und 40 mm über dem Substrat (2, 102) aufweist.

6. Matte (1, 101) nach den Ansprüchen 1 bis 5, wobei die Kunstfasern (4, 104) eine Länge von zwischen 10 mm und 80 mm aufweisen.

7. Matte (1, 101) nach den Ansprüchen 1 bis 6, weiter eine Verstärkungsschicht (7, 107) und/oder eine Trägerschicht (6, 106) unterhalb der Dämpfungsschicht (5, 105) umfassend.

8. Matte (1, 101) nach den Ansprüchen 1 bis 7, wobei zumindest ein Abschnitt des offenen Gewebes haftend an dem Substrat (2, 102) gebunden ist.

9. Kunstrasen (9), insbesondere ein Grassportfeld, umfassend eine Matte (1, 101) nach den Ansprüchen 1 bis 8 und Füllmaterial (8).

10. Kunstrasen (9) nach Anspruch 9, umfassend eine Matte (1, 101) nach den Ansprüchen 1 bis 8, wobei zumindest ein Abschnitt des Füllmaterials (8) durch das offene Gewebe hindurch und bevorzugt auch zwischen den Kunstfasern (4, 104) dispergiert wird.

11. Kunstrasen (9) nach den Ansprüchen 9 bis 10, wobei das Füllmaterial (8) aus Kunststoff, Gummimaterial oder organischem Material hergestellt ist.

12. Kunstrasen (9) nach den Ansprüchen 9 bis 11, mit einer Kraftreduzierung (FR) in dem Bereich von 40 % bis 90 %, bevorzugt in dem Bereich von 55 % bis 70 %, bevorzugter in dem Bereich von 60 % bis 70 %, gemessen entsprechend dem Triple A-Test der Ausgabe Januar 2012 des FIFA Quality Concept Test Method-Handbuchs.

13. Kunstrasen (9) nach den Ansprüchen 9 bis 12, mit einer vertikalen Deformation (VD) in dem Bereich von 4-11 mm, bevorzugt in dem Bereich von 4-10 mm, bevorzugter in dem Bereich von 4-9 mm, noch bevorzugter in dem Bereich von 4-8 mm, gemessen entsprechend dem Triple A-Test der Ausgabe Januar 2012 des FIFA Quality Concept Test Method-Handbuchs.

14. Kunstrasen (9) nach den Ansprüchen 9 bis 13, mit einer Energierestitution (ER) in dem Bereich von 10 % bis 80 %, bevorzugt in dem Bereich von 20 % bis 40 %, bevorzugter in dem Bereich von 20 % bis 30 %, gemessen entsprechend dem Triple A-Test der Ausgabe Januar 2012 des FIFA Quality Concept Test Method-Handbuchs.

15. Verfahren zur Herstellung einer Matte (1, 101) nach den Ansprüchen 1 bis 8, umfassend die Schritte von (i) Bereitstellen einer Dämpfungsschicht (5, 105), umfassend ein Substrat (2, 102) als eine untere Schicht, auf welcher ein offenes Gewebe von kontinuierlich ineinander eingreifenden gekräuselten Fäden (3, 103) aus einem elastischen Polymerwerkstoff bereitgestellt ist, welche eine integrierte Struktur bilden, und (ii) Tufting von Kunstfasern (4, 104) durch die und oberhalb der Dämpfungsschicht (5, 105), welche eine Tufting-Struktur bilden.

## Revendications

1. Tapis (1, 101), pour former un gazon artificiel (9), comprenant une couche amortissante (5, 105) ; et des fibres artificielles (4, 104) ; lesdites fibres artificielles (4, 104) sont attachées à ladite couche amortissante (5, 105) au moyen de techniques de tuftage, **caractérisées en ce que** ladite couche amortissante (5, 105) comprend un substrat (2, 102) en tant que couche inférieure sur lequel est disposé un réseau ouvert de filaments plissés et imbriqués en permanence (3, 103) d'un matériau polymère résilient formant une structure intégrée et lesdites fibres artificielles (4, 104) s'étendent depuis ledit substrat (2, 102) jusqu'à travers et au-dessus dudit réseau ouvert.

2. Tapis (1, 101) selon la revendication 1, dans lequel ledit substrat (2, 102) et lesdits filaments (3, 103) sont constitués d'un matériau polymère thermoplastique.

3. Tapis (1, 101) selon les revendications 1 ou 2, dans lequel ledit substrat (2, 102) est une couche polymère extrudée et expansée.

4. Tapis (1, 101) selon les revendications 1 à 3, dans lequel ledit substrat (2, 102) présente une épaisseur comprise entre 0,5 mm et 10 mm.

5. Tapis (1, 101) selon les revendications 1 à 4, dans lequel ledit réseau ouvert de filaments plissés et imbriqués en permanence (3, 103) présente une hauteur comprise entre 3 mm et 40 mm au-dessus dudit substrat (2, 102).

6. Tapis (1, 101) selon les revendications 1 à 5, dans lequel lesdites fibres artificielles (4, 104) présentent une longueur comprise entre 10 mm et 80 mm.

7. Tapis (1, 101) selon les revendications 1 à 6, comprenant en outre une couche de renforcement (7, 107) et/ou une couche de support (6, 106) sous ladite couche amortissante (5, 105).

8. Tapis (1, 101) selon les revendications 1 à 7, dans lequel au moins une partie dudit réseau ouvert est lié de façon adhésive audit substrat (2, 102).

9. Gazon artificiel (9), en particulier un terrain de sport en gazon, comprenant un tapis (1, 101) selon les revendications 1 à 8 ; et un matériau de remplissage (8).

10. Gazon artificiel (9) selon la revendication 9, comprenant un tapis (1, 101) selon les revendications 1 à 8, dans lequel au moins une partie dudit matériau de remplissage (8) est dispersée dans l'ensemble dudit réseau ouvert, et préférentiellement également entre lesdites fibres artificielles (4, 104).

11. Gazon artificiel (9) selon les revendications 9 à 10, dans lequel le matériau de remplissage (8) est constitué de matières plastiques, de matériau en caoutchouc, ou de matière organique.

12. Gazon artificiel (9) selon les revendications 9 à 11, ayant une réduction de force (FR) comprise entre 40 % et 90 %, préférentiellement comprise entre 55 % et 70 %, plus préférentiellement comprise entre 60 % et 70 % mesurée selon le test Triple A de l'Édition de janvier 2012 du Manuel des Méthodes de Test du Concept Qualité de la FIFA.

13. Gazon artificiel (9) selon les revendications 9 à 12, ayant une déformation verticale (VD) comprise entre 4 et 11 mm, préférentiellement comprise entre 4 et 10 mm, plus préférentiellement comprise entre 4 et 9 mm, encore plus préférentiellement comprise entre 4 et 8 mm mesurée selon le test Triple A de l'Édition de janvier 2012 du Manuel des Méthodes de Test du Concept Qualité de la FIFA.

14. Gazon artificiel (9) selon les revendications 9 à 13, ayant une restitution d'énergie (ER) comprise entre 10% et 80%, préférentiellement comprise entre 20% et 40%, et plus préférentiellement comprise entre 20 % et 30 % mesurée selon le test Triple A de l'Édition de janvier 2012 du Manuel des Méthodes de Test du Concept Qualité de la FIFA.

15. Procédé de production d'un tapis (1, 101) selon les revendications 1 à 8, comportant les étapes consistant à (i) fournir une couche amortissante (5, 105) comprenant un substrat (2, 102) en tant que couche inférieure sur lequel est disposé un réseau ouvert de filaments plissés et imbriqués en permanence (3, 103) d'un matériau polymère résilient formant une structure intégrée et (ii) tufter des fibres artificielles (4, 104) à travers et au-dessus de la couche amortissante (5, 105), formant une structure tuftée.
